# DEMANDE DE BREVET EUROPEEN

(11) **EP 3 815 935 A1**
(43) Date de publication de la demande: **05.05.2021**
(21) Numéro de dépôt: 20202053.3
(22) Date de dépôt: 15.10.2020
(51) Int. Cl.: B60D 1/01, B60D 1/30, B60D 1/62, B60P 1/16, B62D 53/06, B62D 53/08, B60P 1/04, B60R 16/023, B60W 30/04

(54) **SYSTEME DE SECURITE POUR VEHICULE DE TRANSPORT INDUSTRIEL COMPORTANT UN CAISSON DE CHARGEMENT BASCULANT**

(30) Priorité: 28.10.2019 FR 1912037
(71) Demandeur: BENALU, 62800 Lievin (FR)
(72) Inventeur: GRESSIER, Christophe, 59251 Allennes les Marais (FR)
(74) Mandataire: Matkowska, Franck

(57) **Abrégé**

Le système de sécurité (3), pour véhicule de transport industriel (V) comporte au moins un capteur de pression (30), qui est apte à détecter la pression hydraulique (P) dans des moyens de levage hydrauliques (24) permettant de faire pivoter vers le haut le caisson chargement (22) et moins dispositif de détection d'un état de fonctionnement du véhicule industriel, lequel dispositif de détection est choisi parmi le groupe suivant : dispositif de détection de l'angle d'inclinaison latérale du véhicule de transport industriel (V), dispositif de détection de l'angle d'inclinaison au moins vers l'avant du véhicule de transport industriel (V), dispositif de détection de la vitesse de déplacement du véhicule de transport industriel (V) . Ce système de sécurité (3) est apte à détecter automatiquement un risque de renversement du véhicule de transport industriel (V) à partir de l'état de fonctionnement du véhicule détecté au moyen dudit dispositif de détection et lorsqu'une pression hydraulique (P) supérieure à un seuil de pression (Sp) est détectée par le capteur de pression (30) pendant que le caisson de chargement (22) est en position basse sur le châssis roulant (21) et n'est pas soulevé par rapport au châssis roulant (21).

## Description

### Domaine technique

La présente invention concerne un système de sécurité pour véhicule de transport industriel, du type comportant un châssis roulant, sur lequel est monté un caisson de chargement apte à pivoter vers le haut par rapport au châssis roulant, afin notamment de permettre le déchargement par gravité de son chargement. Ce système de sécurité permet de détecter automatiquement un risque de renversement du véhicule.

### Art antérieur

Il est connu d'utiliser des véhicules de transport industriels avec caisson de chargement basculant du type susvisé pour transporter tout type de produits, et plus particulièrement, mais non exclusivement, des produits en vrac tels que par exemple, et de manière non exhaustive, des matières agricoles en vrac (céréales, betteraves, pommes de terre, ...), des matériaux de terrassement ou déchets en vrac (terre, sable, gravas...).

Le véhicule de transport industriel avec caisson de chargement basculant peut comporter un véhicule tracteur auquel est attelée une semi-remorque comportant ledit châssis roulant sur lequel est monté le caisson de chargement basculant. Le véhicule de transport industriel avec caisson de chargement basculant peut comporter un camion porteur auquel est attelée une remorque comportant ledit châssis roulant sur lequel est monté le caisson de chargement basculant. Le véhicule de transport industriel avec caisson de chargement basculant peut également être un camion porteur ou équivalent comportant ledit châssis roulant sur lequel est monté le caisson de chargement basculant.

Quel que soit le type de véhicule de transport industriel, le caisson de chargement porté par le châssis roulant peut selon le cas être non-amovible ou être amovible par rapport au châssis roulant, afin de pouvoir être déposé sur le sol.

Ce caisson de chargement peut être de type benne ouverte sur le dessus pour son chargement gravitaire ou peut être un caisson fermé de type conteneur.

Pour permettre le basculement vers le haut du caisson de chargement par rapport au châssis roulant, le véhicule de transport industriel est de manière usuelle équipée d'un circuit hydraulique alimentant un ou plusieurs vérins de levage hydrauliques, qui sont montés entre le châssis roulant et le caisson de chargement basculant, et qui permettent de lever le caisson de chargement en le faisant pivoter vers le haut par rapport au châssis roulant. Selon le type de véhicule transport industriel, le caisson de chargement peut être apte à basculer par rapport au châssis roulant vers le haut et vers l'arrière du véhicule et/ou le caisson de chargement peut être apte à basculer par rapport au châssis roulant vers le haut et latéralement vers au moins un des côtés du véhicule, voire dans certain cas vers chaque côté du véhicule.

Pour décharger ce type de caisson basculant par voie gravitaire, le chauffeur du véhicule commande le ou les vérins de levage hydrauliques, de manière à faire basculer progressivement vers le haut et selon le cas vers l'arrière ou latéralement le caisson de chargement basculant, de manière à obtenir une évacuation gravitaire progressive de son chargement.

Au cours d'une telle opération de déchargement, il est primordial que le véhicule de transport industriel ne soit pas sur une pente transversale trop importante, car un dévers trop important du véhicule pourrait entraîner son renversement lorsque le caisson de chargement est basculé vers le haut et vers l'arrière.

Par ailleurs, au cours d'une telle opération de déchargement, lorsque le véhicule est en contre-pente, cette contre-pente a pour effet de réduire l'angle final d'écoulement du chargement en fin de course du ou des vérins et également d'augmenter la pression nécessaire en fin de déchargement, cette pression nécessaire pouvant être supérieure à la pression hydraulique maximale disponible. Dans ce cas le ou les dernières expansions du vérin peuvent ne pas se déployer, ce qui limite encore l'angle final d'écoulement. Il est donc également primordial, lorsque le véhicule de transport industriel est en contre-pente, que cette contre-pente ne soit pas trop importante.

En outre, lorsque le véhicule de transport industriel est en train de rouler, il est également primordial que le caisson basculant ne soit pas basculé vers le haut, même d'un angle de basculement faible, afin d'éviter un renversement accidentel sur le côté du véhicule de transport industriel.

Afin de réduire les risques de renversement d'une semi-remorque à caisson de chargement basculant, on a déjà proposé, notamment dans la demande de brevet européen EP 2 781 404, un système de sécurité qui comporte notamment un premier dispositif de détection mesurant l'angle de basculement du caisson de chargement par rapport au châssis de a semi-remorque, un deuxième dispositif de détection mesurant le dévers (angle d'inclinaison latérale) du véhicule de transport industriel, un troisième dispositif de détection mesurant l'angle de rotation du véhicule tracteur par rapport à la semi-remorque, et des moyens de traitement électroniques qui permettent de déclencher automatiquement une alerte informant d'un risque de renversement lorsqu'une combinaison de valeurs des trois angles susvisés a été atteinte.

Afin de réduire les risques de renversement d'une semi-remorque à caisson de chargement basculant, on a également proposé, dans la demande de brevet italien IT201600082105, un système de sécurité qui peut comporter des moyens de détection de l'inclinaison latérale du véhicule de transport industriel, des moyens de détection de l'inclinaison vers l'avant ou vers l'arrière du véhicule de transport industriel par rapport à l'horizontal, et des moyens de détection de la charge supportée par le ou les vérins de levage hydrauliques. Ces moyens de détection de la charge supportée par le ou les vérins de levage hydrauliques comportent plus particulièrement un dispositif de mesure de la pression hydraulique dans le ou les vérins de levage hydrauliques et un dispositif de mesure du débit de fluide à l'entrée du ou les vérins de levage hydrauliques, de manière à pouvoir déterminer la longueur de l'extension du ou des vérins de levage hydrauliques, et en combinaison avec la pression hydraulique mesurée, à calculer la charge supportée par le ou les vérins de levage hydrauliques.

La publication WO2016/142196 divulgue un système de sécurité pour véhicule de transport industriel comportant un châssis roulant, sur lequel est monté un caisson de chargement vide ou chargé, qui est apte à pivoter vers le haut par rapport au châssis roulant, et des moyens de levage hydrauliques, qui comportent au moins un vérin de levage hydraulique et qui permettent de lever le caisson de chargement par rapport au châssis (6) en le faisant pivoter vers le haut. Cette publication WO2016/142196 divulgue également la mise en œuvre d'au moins un capteur de pression, qui est apte à détecter la pression hydraulique dans les moyens de levage hydrauliques, et au moins dispositif de détection d'un état de fonctionnement du véhicule industriel, lequel dispositif de détection peut être dispositif de détection de l'angle d'inclinaison du véhicule de transport industriel ou un dispositif de détection de la vitesse de déplacement du véhicule de transport industriel.

Compte-tenu des pressions hydrauliques importantes qui sont nécessaires en pratique pour lever et faire pivoter le caisson de chargement basculant par rapport au châssis et compte-tenu de l'inertie de l'ensemble vérin(s) hydraulique(s)/caisson de chargement basculant, en particulier lorsque le caisson est chargé, il peut arriver avec les systèmes de sécurité susvisés que la détection d'un risque de reversement intervienne trop tardivement, y compris par exemple dans le cas du système de sécurité demande de brevet européen EP 2 781 404, lorsque le seuil de détection utilisé pour l'angle de basculement du caisson est très faible.

La mise en œuvre de ces solutions techniques présente ainsi le risque et l'inconvénient dans de nombreux cas d'aboutir à une détection trop tardive d'une situation à risque et de ce fait de conduire à un déclenchement d'alerte trop tardif pour que le chauffeur du véhicule puisse réagir à temps et éviter un renversement du véhicule.

### Objectif de l'invention

La présente invention a pour objectif principal de proposer une nouvelle solution technique, qui permet de détecter automatiquement un risque de renversement d'un véhicule de transport industriel du type susvisé, et qui peut dans de nombreuses situations pallier l'inconvénient susvisé de l'art antérieur lié à un risque de retard dans la détection du risque de renversement du véhicule.

### Résumé de l'invention

L'invention a ainsi pour objet un système de sécurité pour véhicule de transport industriel comportant un châssis roulant, sur lequel est monté un caisson de chargement, vide ou chargé, qui est apte à pivoter vers le haut par rapport au châssis roulant, et des moyens de levage hydrauliques, qui comportent au moins un vérin de levage hydraulique et qui permettent de lever le caisson de chargement par rapport au châssis en le faisant pivoter vers le haut. Ce système de sécurité est défini dans la revendication 1.

Dans le présent texte, on désigne par châssis «roulant» ou par véhicule industriel «roulant», un châssis ou véhicule industriel apte à rouler.

De manière facultative selon l'invention, le système de sécurité de l'invention peut également comporter les caractéristiques techniques optionnelles ci-après, prises isolément ou en combinaison :
- le seuil de pression (Sp) est réglable.
- le seuil de pression (Sp) est inférieur ou égal à la pression hydraulique minimale nécessaire pour soulever le caisson de chargement chargé au maximum du poids total roulant autorisé (PTRA) du véhicule de transport industriel.
- le seuil de pression (Sp) est inférieur ou égal à la pression hydraulique minimale nécessaire pour lever le caisson de chargement chargé à 75% du poids total roulant autorisé (PTRA) du véhicule de transport industriel.
- le seuil de pression (Sp) est inférieur ou égal à la pression hydraulique minimale nécessaire pour lever le caisson de chargement chargé à la moitié du poids total roulant autorisé (PTRA) du véhicule de transport industriel.
- le seuil de pression (Sp) est inférieur ou égal à la pression hydraulique minimale nécessaire pour lever le caisson de chargement chargé à un tiers du poids total roulant autorisé (PTRA) du véhicule de transport industriel.
- le seuil de pression (Sp) est inférieur ou égal à la pression hydraulique minimale nécessaire pour lever le caisson de chargement à vide.
- le seuil de pression (Sp) est inférieur ou égal à 10 bars et plus particulièrement est égal à zéro.
- le capteur de pression est monté sur le vérin de levage hydraulique et permet de détecter la pression hydraulique dans ce vérin de levage hydraulique.
- le système de sécurité comporte un dispositif de détection de l'angle d'inclinaison latérale (β) du véhicule de transport industriel, et ledit système de sécurité est apte à détecter automatiquement un risque de renversement du véhicule de transport industriel roulant, lorsque l'angle d'inclinaison latérale (β) détecté par ce dispositif de détection est supérieur ou égal à au moins un seuil de dévers (S_{β}), qui est éventuellement réglable, et qu'une pression hydraulique supérieure à un seuil de pression (Sp) est détectée par le capteur de pression pendant que le caisson de chargement est en position basse sur le châssis et n'est pas soulevé par rapport au châssis.
- le système de sécurité est apte à détecter automatiquement ledit risque de renversement du véhicule de transport industriel roulant, tant que l'angle d'inclinaison latérale (β) est supérieur ou égal au seuil de dévers (S_{β}), ou tant qu'une pression hydraulique supérieure audit seuil de pression (Sp) est détectée par le capteur de pression.
- le seuil de dévers (Sp) est compris entre 1° et 15°, et de préférence entre 2° et 10°.
- le système de sécurité comporte un dispositif de détection (31b) de l'angle d'inclinaison (Φ) au moins vers l'avant du véhicule de transport industriel, et est apte à détecter automatiquement un risque de renversement du véhicule de transport industriel roulant, lorsque le véhicule est en contre-pente, avec un angle d'inclinaison (Φ) vers l'avant du véhicule de transport industriel détecté par ce dispositif de détection qui est supérieur ou égal à au moins un seuil de contre-pente (S_{Φ}), éventuellement réglable, et qu'une pression hydraulique supérieure à un seuil de pression (Sp) est détectée par le capteur de pression pendant que le caisson de chargement est en position basse sur le châssis et n'est pas soulevé par rapport au châssis.
- le système de sécurité est apte à détecter automatiquement ledit risque de renversement du véhicule de transport industriel roulant, tant que l'angle d'inclinaison (Φ) vers l'avant est supérieur ou égal au seuil de contre-pente (S_{Φ}), ou tant qu'une pression hydraulique supérieure audit seuil de pression (Sp) est détectée par le capteur de pression .
- le seuil de contre-pente (S_{Φ}) est compris entre 1° et 15°, et de préférence entre 2° et 10°.
- le système de sécurité comporte un dispositif de détection permettant de détecter la vitesse de déplacement du véhicule de transport industriel, et est apte à détecter automatiquement un risque de renversement du véhicule de transport industriel roulant, lorsque la vitesse de déplacement du véhicule de transport industriel détecté par ce dispositif de détection (est supérieure ou égale à au moins un seuil de vitesse (Sᵥ), qui est éventuellement réglable, et qu'une pression hydraulique supérieure à un seuil de pression (Sp) est détectée par le capteur de pression pendant que le caisson de chargement est en position basse sur le châssis et n'est pas soulevé par rapport au châssis.
- le système de sécurité est apte à détecter automatiquement ledit risque de renversement du véhicule de transport industriel roulant, tant que la vitesse de déplacement est supérieure ou égale audit seuil de vitesse (Sᵥ), ou tant qu'une pression hydraulique supérieure audit seuil de pression (Sp) est détectée par le capteur de pression.
- ledit seuil de vitesse (Sv) est compris entre 20km/h et 30km/h.
- le système de sécurité comportent au moins deux dispositifs de détection différents, qui sont aptes à détecter des états de fonctionnement du véhicule différents, et qui sont choisis parmi le groupe suivant : dispositif de détection de l'angle d'inclinaison latérale (β) du véhicule de transport industriel, dispositif de détection de l'angle d'inclinaison (Φ) au moins vers l'avant du véhicule de transport industriel, dispositif de détection de la vitesse de déplacement du véhicule de transport industriel.
- le système de sécurité comporte au moins les trois dispositifs de détection suivants : dispositif de détection de l'angle d'inclinaison latérale (β) du véhicule de transport industriel, dispositif de détection de l'angle d'inclinaison (Φ) au moins vers l'avant du véhicule de transport industriel, dispositif de détection de la vitesse de déplacement du véhicule de transport industriel.
- le système de sécurité est apte à déclencher automatiquement une alarme visuelle et/ou sonore, en cas de détection d'un risque de renversement du véhicule industriel roulant.
- le système de sécurité comporte une mémoire électronique fixe ou amovible, et dans laquelle le système sécurité est apte à stocker, de préférence en les horodatant, la pression hydraulique détectée par le capteur de pression et une information relative à l'état de fonctionnement du véhicule détecté par le dispositif de détection au moins à chaque détection d'un risque de renversement et/ou à intervalles de temps prédéfinis.
- au moins ladite mémoire électronique est logée à l'intérieur d'un boîtier de protection, qui est fermé, et qui de préférence est scellé au moyen d'un sceau permettant de contrôler si le boîtier a été ouvert.

L'invention a également pour objet un véhicule de transport industriel et un système de sécurité susvisé, le véhicule de transport industriel comportant un châssis roulant sur lequel est monté un caisson de chargement, qui est apte à pivoter vers le haut par rapport au châssis roulant, et des moyens de levage, qui comportent au moins un vérin de levage hydraulique, et qui permettent de lever le caisson de chargement, en le faisant pivoter vers le haut par rapport au châssis roulant.

De manière facultative selon l'invention, le véhicule de transport industriel et le système de sécurité de l'invention peuvent également comporter les caractéristiques techniques optionnelles ci-après, prises isolément ou en combinaison :
- le système de sécurité est apte à détecter automatiquement ledit risque de renversement du véhicule de transport industriel, pendant que le caisson de chargement est en position basse sur le châssis et n'est pas soulevé par rapport au châssis, au moins lorsque le poids total du véhicule de transport industriel chargé est égal au poids total roulant autorisé (PTRA) du véhicule de transport industriel.
- le système de sécurité est apte à détecter automatiquement ledit risque de renversement du véhicule de transport industriel, pendant que le caisson de chargement est en position basse sur le châssis et n'est pas soulevé par rapport au châssis, au moins lorsque le poids total du véhicule de transport industriel chargé est égal à 75% du poids total roulant autorisé (PTRA) du véhicule de transport industriel, de préférence au moins lorsque le poids total du véhicule de transport industriel chargé est égal à la moitié du poids total roulant autorisé (PTRA) du véhicule de transport industriel, et plus préférentiellement encore au moins lorsque le poids total du véhicule de transport industriel chargé est égal à un tiers du poids total roulant autorisé (PTRA) du véhicule de transport industriel.

- le système de sécurité (est apte à détecter automatiquement ledit risque de renversement du véhicule de transport industriel, au moins lorsque le caisson de chargement est vide et en position basse sur le châssis de la semi-remorque et n'est pas soulevé par rapport au châssis.
- le véhicule de transport industriel comporte un véhicule tracteur et une semi-remorque apte à être attelée au véhicule tracteur, ou un camion porteur et une remorque apte à être attelée au camion porteur, ou le véhicule de transport industriel est constitué par un camion porteur.
- ledit système de sécurité est dans son intégralité monté sur la semi-remorque (2) ou sur la remorque ou sur le camion porteur. L'invention a également pour objet une semi-remorque ou remorque ou camion porteur équipé d'un système de sécurité susvisé, la semi-remorque ou la remorque ou le camion porteur comportant un châssis roulant sur lequel est monté un caisson de chargement, qui est apte à pivoter vers le haut par rapport au châssis roulant, et des moyens de levage, qui comportent au moins un vérin de levage hydraulique, et qui permettent de lever le caisson de chargement, en le faisant pivoter vers le haut par rapport au châssis roulant.

L'invention a pour autre objet un premier procédé de contrôle du fonctionnement du véhicule de transport industriel susvisé, procédé au cours d'une opération de déchargement du caisson de chargement, au cours duquel initialement le ou les vérins de levage hydrauliques ne sont pas alimentés et le caisson de chargement est en position basse sur le châssis et n'est pas encore levé par le ou les vérins de levage hydrauliques, et au cours duquel on commande les moyens de levage hydrauliques, de manière à alimenter le ou les vérins de levage hydrauliques, avec une pression hydraulique croissante, et on contrôle en permanence, au moyen du système de sécurité, l'angle d'inclinaison latérale (β) du véhicule de transport industriel et la pression hydraulique dans les moyens de levage hydrauliques, en sorte de détecter automatiquement, au moyen du système de sécurité, un risque de renversement du véhicule de transport industriel pendant la phase de fonctionnement au cours de laquelle le ou les vérins de levage hydrauliques sont alimentés sous pression mais le caisson de chargement est en position basse sur le châssis et n'est pas encore levé par le ou les vérins de levage hydrauliques.

L'invention a pour autre objet un deuxième procédé de contrôle du fonctionnement du véhicule de transport industriel susvisé, au cours d'une opération de déchargement du caisson de chargement, procédé au cours duquel initialement le ou les vérins de levage hydrauliques ne sont pas alimentés et le caisson de chargement est en position basse sur le châssis et n'est pas encore levé par le ou les vérins de levage hydrauliques, et au cours duquel on commande les moyens de levage hydrauliques, de manière à alimenter le ou les vérins de levage hydrauliques, avec une pression hydraulique croissante, et on contrôle en permanence, au moyen du système de sécurité, l'angle d'inclinaison (Φ) vers l'avant du véhicule de transport industriel et la pression hydraulique dans les moyens de levage hydrauliques, en sorte de détecter automatiquement, au moyen du système de sécurité, un risque de renversement du véhicule de transport industriel pendant la phase de fonctionnement au cours de laquelle le ou les vérins de levage hydrauliques sont alimentés sous pression mais le caisson de chargement est en position basse sur le châssis et n'est pas encore levé par le ou les vérins de levage hydrauliques.

Les premier et deuxième procédés susvisés peuvent le cas échéant être réalisés en même temps.

L'invention a pour autre objet un troisième procédé de contrôle du fonctionnement du véhicule de transport industriel susvisé, en cours de roulage du véhicule, procédé au cours duquel on contrôle en permanence au moyen du système de sécurité la vitesse de déplacement du véhicule de transport industriel et la pression hydraulique dans les moyens de levage hydrauliques, en sorte de détecter automatiquement, au moyen du système de sécurité, un risque de renversement du véhicule de transport industriel pendant que le caisson de chargement est en position basse sur le châssis et n'est pas encore levé par le ou les vérins de levage hydrauliques.

Plus particulièrement, et de manière facultative, dans l'un et/ou l'autre des procédés de contrôle susvisés, on coupe automatiquement ou manuellement l'alimentation hydraulique du ou des vérins de levage hydrauliques, lorsqu'on détecte automatiquement au moyen du système de sécurité un risque de renversement du véhicule de transport industriel pendant que le caisson de chargement est en position basse sur le châssis et n'est pas encore levé par le ou les vérins de levage hydrauliques.

### Brève description des figures

D'autres caractéristiques et avantages de l'invention apparaîtront plus clairement à la lecture de la description détaillée ci-après de plusieurs variantes de réalisation de l'invention, laquelle description détaillée est donnée à titre d'exemple non limitatif et non exhaustif de l'invention, et en référence aux dessins annexés sur lesquels :
- la figure 1 est une vue d'ensemble isométrique d'un véhicule de transport industriel, qui comporte une semi-remorque attelée à un véhicule tracteur, et qui est équipé d'un système sécurité conforme à l'invention, le caisson de chargement basculant de la semi-remorque étant en position basse ;
- la figure 2 est une vue d'ensemble isométrique du véhicule de transport industriel de la figure 1 en position horizontale, le caisson de chargement basculant de la semi-remorque étant basculé en position haute ;
- la figure 3 est une vue de de face du véhicule de transport industriel de la figure 1 positionné sur une pente transversale formant un dévers pour le véhicule,

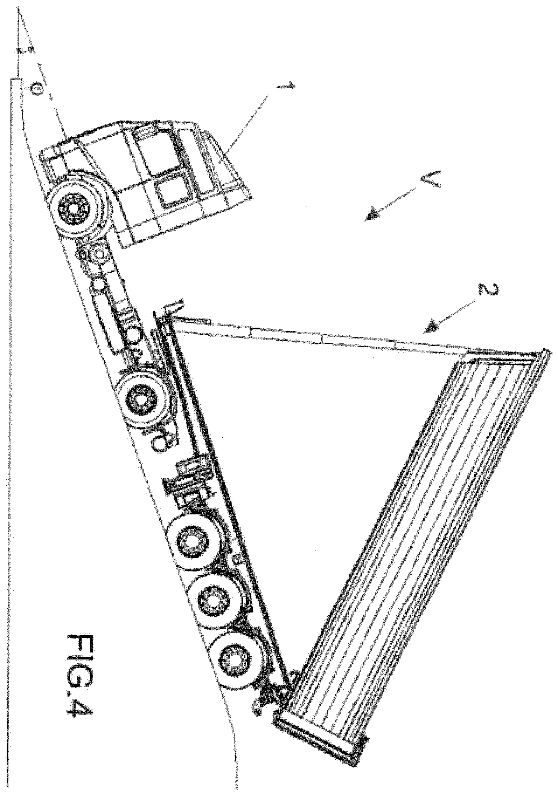

- la figure 4 est vue d'ensemble isométrique du véhicule de transport industriel de la figure 1 en contre-pente, le caisson de chargement basculant de la semi-remorque étant basculé en position haute,
- la figure 5 est un exemple particulier de réalisation du système de sécurité de l'invention représenté sous forme de schéma-bloc.

### Description détaillée

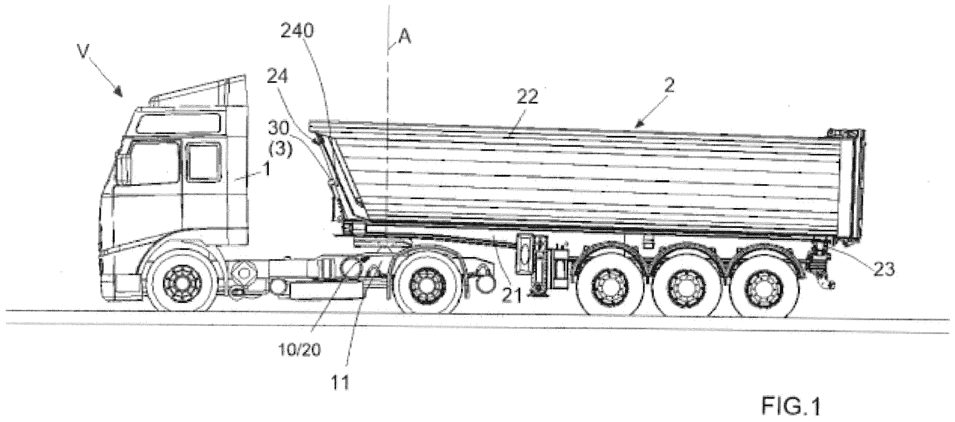

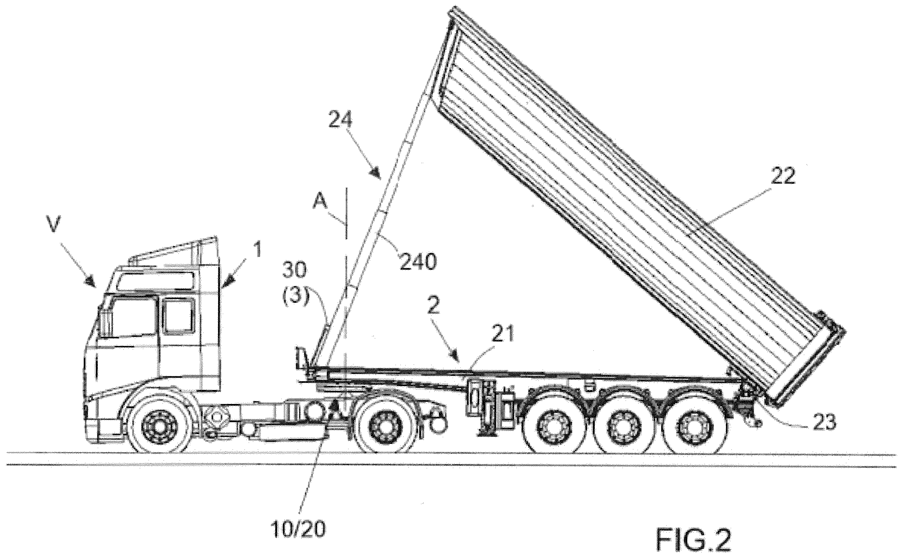

On a représenté sur les figures 1 et 2, un véhicule de transport industriel V, qui comporte un véhicule tracteur 1 et une semi-remorque 2 attelée au véhicule tracteur 1, au moyen d'un dispositif d'attelage 10/20, et qui est équipé d'un système de sécurité 3 conforme à l'invention.

Le dispositif d'attelage comporte par exemple, et de manière usuelle, une sellette 10 qui est montée sur le châssis 11 du véhicule tracteur 1, en étant de manière usuelle articulée en rotation par rapport au châssis 11 autour d'un axe transversal horizontal et un pivot d'attelage 20 qui est fixé sous le châssis roulant 21 de la semi-remorque 2 et qui est caractérisé par un axe de rotation A dit « vertical ».

Lorsque la semi-remorque 2 est attelée au véhicule tracteur 1, le pivot d'attelage 20 est logé et guidé en rotation dans un logement cylindrique de la sellette 10, autour de l'axe de rotation A vertical du pivot d'attelage 20, cet axe de rotation A vertical étant orienté sensiblement perpendiculairement à la surface sur laquelle roule la semi-remorque 2 et le dispositif d'attelage 10/20 permettant au véhicule tracteur 1 de pivoter par rapport à la semi-remorque 2 autour de cet axe de rotation vertical A.

En référence aux figures 1 et 2, la semi-remorque 2 comporte un caisson de chargement 22, qui est monté sur le châssis roulant 21 et qui est apte à pivoter vers le haut et vers l'arrière par rapport au châssis roulant 21 autour d'un axe de rotation transversal horizontal 23 positionné à l'arrière du châssis.

La semi-remorque 2 comporte également des moyens de levage hydrauliques 24, qui permettent (figure 2) de lever le caisson de chargement 22 en le faisant pivoter vers le haut et vers l'arrière autour dudit axe de rotation 23, notamment lors des opérations de déchargement gravitaire par l'arrière du caisson 22.

Il convient de noter que l'invention n'est pas limitée à un caisson de chargement basculant apte à pivoter vers le haut et vers l'arrière par rapport au châssis de la semi-remorque, mais peut s'appliquer également à un caisson de chargement basculant apte à pivoter vers le haut et latéralement vers au moins un des côtés du véhicule de transport industriel, et plus particulièrement latéralement vers chacun des deux côtés du véhicule de transport industriel.

Il convient également de noter que l'invention n'est pas non plus limitée à un véhicule de transport industriel V comportant un véhicule tracteur 1 et une semi-remorque 2, mais peut s'appliquer à tout type de véhicule de transport industriel V comportant un châssis roulant sur lequel un caisson de chargement 22 qui est apte à pivoter vers le haut par rapport au châssis roulant 21, et des moyens de levage hydrauliques 24 qui permettent de lever le caisson de chargement 22 par rapport au châssis 21 en le faisant pivoter vers le haut.

Le véhicule de transport industriel V avec caisson de chargement basculant 22 peut comporter un camion porteur auquel est attelée une remorque comportant ledit châssis roulant 21 sur lequel est monté le caisson de chargement basculant 22. Le véhicule de transport industriel V avec caisson de chargement basculant 22 peut également être un camion porteur ou équivalent comportant ledit châssis roulant 21 sur lequel est monté le caisson de chargement basculant 22.

Les moyens de levage hydrauliques 24 comportent, de manière connue en soi, au moins un vérin de levage hydraulique 240 positionné entre le châssis roulant 21 et le caisson de chargement 22. Dans certains cas, les moyens de levage hydrauliques 24 peuvent comporter au moins deux vérins de levage hydrauliques 240 parallèles.

Ces moyens de levage hydrauliques 24 comportent également, de manière connue en soi, un circuit d'alimentation hydraulique, qui permet d'alimenter en énergie hydraulique (typiquement de l'huile sous pression) le ou les vérins de levage hydrauliques 240, par exemple avec de l'énergie hydraulique provenant du véhicule tracteur 1 ou avec de l'énergie hydraulique fournie par une pompe installée sur la semi-remorque 2.

Ce circuit d'alimentation hydraulique est de manière usuelle commandé manuellement par le chauffeur du véhicule V depuis la cabine du véhicule tracteur, de manière à permettre au chauffeur du véhicule V de commander manuellement le levage ou au contraire l'abaissement du caisson de chargement 22.

### Système de sécurité 3

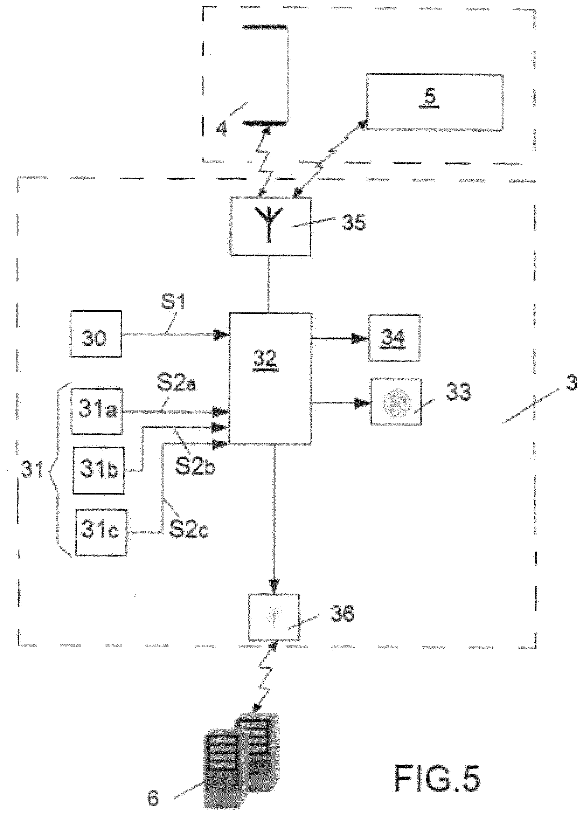

Le système de sécurité 3 (figure 5) comporte au moins un capteur de pression 30 apte à détecter la pression hydraulique dans les moyens de levage hydrauliques 24, un ensemble de détection 31 comportant, dans cet exemple particulier, trois dispositifs de détection 31a, 31b, 31c, qui permettent chacun de détecter un état de fonctionnement différent du véhicule de transport industriel V, et une unité de traitement 32, qui est reliée au capteur de pression 30 et aux dispositifs de détection 31a, 31b, 31c.

Cette unité de traitement 32 est conçue de manière à détecter automatiquement un risque de renversement du véhicule V à partir de la pression hydraulique P détectée par le capteur de pression 30 et des états de fonctionnement détectés à l'aide des dispositifs de détection 31a, 31b, 31c.

### Capteur de pression 30

Tel qu'illustré dans l'exemple particulier des figures 1 et 2, le capteur de pression 30 peut être monté sur le vérin hydraulique 240 de manière à détecter la pression hydraulique P directement dans le vérin hydraulique 240.

Dans une autre variante de réalisation, ce capteur de pression 30 peut être monté en tout point du circuit alimentation hydraulique servant à alimenter le ou les vérins hydrauliques 240.

En référence à la figure 5, ce capteur de pression 30 délivre un signal électrique de détection S1, qui d'une manière générale peut être de type analogique ou numérique, qui est fonction de la pression hydraulique P détectée, et qui est traité par l'unité de traitement 32. Ce signal S1 est de préférence transmis à l'unité de traitement 32 par voie filaire, mais peut également dans une autre variante être transmis à l'unité de traitement 32 par des moyens de communication sans fil.

Lorsque le ou les vérins hydrauliques 240 ne sont pas alimentés en énergie hydraulique et que le caisson de chargement 22 est dans sa position basse de la figure 1, dans laquelle il repose sur le châssis roulant 21 de la semi-remorque 2, la pression P détectée par le capteur de pression 30 est nulle.

Lorsque le chauffeur du véhicule V commande le circuit d'alimentation hydraulique pour lever le caisson de chargement 22 par rapport au châssis, le circuit d'alimentation hydraulique alimente le ou les vérins hydrauliques 240 avec une pression croissante jusqu'à obtenir une pression hydraulique minimale dans le ou les vérins hydrauliques 240, qui est suffisante pour lever caisson de chargement 22 en le faisant pivoter vers le haut et, dans l'exemple particulier et non limitatif des figures annexées, vers l'arrière de la semi-remorque.

La pression hydraulique minimale nécessaire pour commencer à lever le caisson de chargement 2 dépend notamment du poids du caisson de chargement 22, et varie notamment en fonction du poids à vide du caisson de chargement 22 et le cas échéant du poids du chargement dans le caisson de chargement.

Tant que cette pression minimale de levage n'est pas atteinte, le caisson de chargement 22 n'est pas levé par rapport au châssis 21 et reste dans sa position basse de la figure 1.

### Dispositif de détection 31a - angle d'inclinaison latérale β

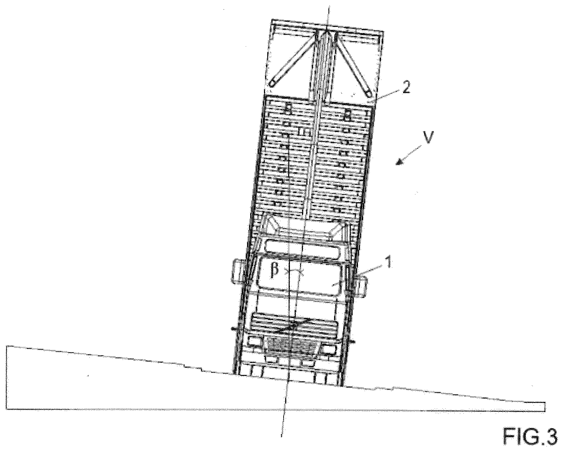

Le dispositif de détection 31a permet de détecter l'angle d'inclinaison latérale β, communément appelé dévers, du véhicule tracteur 1 ou de la semi-remorque 2, par rapport à un plan vertical, (figure 3). Sur l'exemple particulier de la figure 3, le véhicule tracteur 1 et la semi-remorque 2 sont inclinés latéralement vers la droite, étant précisé que le dispositif de détection 31a permet de détecter un angle d'inclinaison latérale β vers la droite et un angle d'inclinaison latérale β vers la gauche.

Le dispositif de détection 31a peut être réalisé au moyen de tout capteur d'inclinaison ou ensemble de capteurs d'inclinaison permettant de détecter cet angle d'inclinaison latérale β, et positionné(s) sur le véhicule tracteur 1 et/ou sur la semi-remorque 2. De préférence, le ou les capteurs d'inclinaison du dispositif de détection 31b sont positionnés sur la semi-remorque par exemple sur le châssis 21 de la semi-remorque 2 et/ou sur le caisson de chargement 22 de la semi-remorque 2.

En référence à la figure 5, ce dispositif de détection 31a délivre au un ou plusieurs signaux de détection S2a, qui d'une manière générale peuvent être de type analogique ou numérique, qui dépendent de l'angle d'inclinaison latérale β détecté et qui sont traités par l'unité de traitement 32.

Le ou les signaux S2a sont de préférence transmis à l'unité de traitement 32 par voie filaire, mais peuvent également dans une autre variante être transmis à l'unité de traitement 32 par des moyens de communication sans fil.

### Dispositif de détection 31b - angle d'inclinaison vers l'avant Φ

Le dispositif de détection 31b permet de détecter au moins l'angle d'inclinaison vers l'avant Φ du véhicule tracteur 1 ou de la semi-remorque 2 par rapport à un plan horizontal, et le cas échéant éventuellement l'angle d'inclinaison vers l'arrière du véhicule tracteur 1 ou de la semi-remorque 2 par rapport à un plan horizontal.

Le dispositif de détection 31b peut être réalisé au moyen de tout capteur d'inclinaison ou ensemble de capteurs d'inclinaison permettant de détecter cet angle d'inclinaison vers l'avant Φ, et positionné(s) sur le véhicule tracteur 1 et/ou sur la semi-remorque 2. De préférence, le ou les capteurs d'inclinaison du dispositif de détection 31b sont positionnés sur la semi-remorque par exemple sur le châssis 21 de la semi-remorque 2 et/ou sur le caisson de chargement 22 de la semi-remorque 2.

En référence à la figure 5, ce dispositif de détection 31b délivre au un ou plusieurs signaux de détection S2b, qui d'une manière générale peuvent être de type analogique ou numérique, qui dépendent de l'angle d'inclinaison vers l'avant Φ détecté et qui sont traités par l'unité de traitement 32.

Le ou les signaux S2b sont de préférence transmis à l'unité de traitement 32 par voie filaire, mais peuvent également dans une autre variante être transmis à l'unité de traitement 32 par des moyens de communication sans fil.

### Dispositif de détection 31c - vitesse de déplacement

Le dispositif de détection 31d permet de détecter la vitesse de déplacement du véhicule tracteur 1 ou de la semi-remorque 2. Il peut être réalisé au moyen de tout capteur de déplacement ou ensemble de capteurs de déplacement, notamment capteur(s) de vitesse, accéléromètre(s) ou capteur(s) inertiels, permettant de détecter la vitesse de déplacement du véhicule tracteur 1 ou de la semi-remorque 2 et positionné(s) sur le véhicule tracteur 1 et/ou sur la semi-remorque 2. De préférence, le ou les capteurs du dispositif de détection 31c sont positionnés sur la semi-remorque par exemple sur le châssis 21 de la semi-remorque 2 et/ou sur le caisson de chargement 22 de la semi-remorque 2.

Dans une variante de réalisation, au moins un capteur du dispositif de détection 31c peut être monté sur une des roues de la semi-remorque 2 ou sur une des roues du véhicule tracteur 1 et permet de détecter la vitesse de rotation de cette roue. On peut par exemple utiliser comme capteur de vitesse un capteur de couronne ABS.

En référence à la figure 5, ce dispositif de détection 31c délivre au un ou plusieurs signaux de détection S2c, qui d'une manière générale peuvent être de type analogique ou numérique, qui dépendent de la vitesse de déplacement du véhicule industriel V détectée et qui sont traités par l'unité de traitement 32.

Le ou les signaux S2d sont de préférence transmis à l'unité de traitement 32 par voie filaire, mais peuvent également dans une autre variante être transmis à l'unité de traitement 32 par des moyens de communication sans fil.

### Unité de traitement 32

L'unité de traitement 32 est d'une manière générale conçue pour détecter automatiquement un risque de renversement du véhicule V à partir au moins du signal S1 délivré par le capteur de pression 30 et des signaux de détection S2a, S2b, S2c délivrés par les dispositifs de détection 31a, 31b, 31c.

L'unité de traitement 32 peut indifféremment selon l'invention être implémentée sous la forme d'un microprocesseur ou microcontrôleur apte à exécuter automatiquement un programme chargé dans une mémoire, ou être implémentée sous la forme d'un circuit à portes logiques, notamment un circuit à portes logiques programmable, par exemple de type FPGA, ou être un implémentée sous la forme d'un composant électronique spécifique de type ASIC.

De préférence, cette unité de traitement 32 est avantageusement montée sur le véhicule V et plus préférentiellement encore sur la semi-remorque 2. Néanmoins, dans une autre variante de réalisation, l'unité de traitement 32 pourrait être déportée en étant positionnée à plus ou moins grande distance du véhicule V, les signaux S1, S2a, S2b, S2c étant dans ce cas transmis à l'unité de traitement 32 déportée par des moyens de communication sans fil ayant une portée de transmission adaptée.

### Exemples de fonctionnement du système de sécurité 3

L'unité de traitement 32 contrôle automatiquement et en permanence :
- la pression hydraulique P au moyen du signal S1 délivré par le capteur de pression 30 ;
- l'angle d'inclinaison latérale β du véhicule V au moyen du ou des signaux de détection S2a délivrés par le dispositif de détection 31a ;

- l'angle d'inclinaison vers l'avant Φ du véhicule V au moyen du ou des signaux de détection S2b délivrés par le dispositif de détection 31b ;
- la vitesse déplacement du véhicule V au moyen du ou des signaux de détection S2c délivrés par le dispositif de détection 31c.

L'unité de traitement 32 détecte automatiquement un risque de renversement de véhicule V et déclenche aussitôt une alarme visuelle et/ou sonore 33 (figure 5) pour le chauffeur du véhicule, lorsque que l'unité de traitement 32 détecte, au moyen du signal S1, une pression hydraulique P qui est supérieure à un seuil de pression Sp pendant que le caisson de chargement 22 (selon le cas vide ou chargé) est en position basse sur le châssis 21 de la semi-remorque 2 et n'est pas soulevé par rapport au châssis 21 de la semi-remorque 2, et détecte en même temps :
(a) un angle d'inclinaison latérale β du véhicule V supérieur ou égal à au moins un seuil de dévers Sp,
   ou
(b) un angle d'inclinaison vers l'avant Φ du véhicule V supérieur ou égal à un seuil de contre-pente S_{Φ},
   ou
(c) une vitesse de déplacement du véhicule V supérieure à un seuil de vitesse Sv.

Plus particulièrement, l'unité de traitement 32 est apte à détecter automatiquement ledit risque de renversement du véhicule de transport industriel roulant V, tant que l'une au moins des conditions (a), (b) ou (c) susvisées est remplie ou tant qu'une pression hydraulique P supérieure au seuil de pression Sp est détectée par le capteur de pression 30.

Dans une variante de réalisation, le seuil de dévers Sp ou le seuil de contre-pente S_{Φ} ou le seuil de vitesse Sᵥ peut être prédéfini et non modifiable.

Dans une autre variante de réalisation, le seuil de dévers Sp ou le seuil de contre-pente S_{Φ} ou le seuil de vitesse Sᵥ peut avantageusement être un seuil réglable, qui est modifiable par exemple par un utilisateur ou par le constructeur du système de sécurité 3 ou qui peut être calculé et peut être modifié par l'unité de traitement 32.

Dans une variante de réalisation, il est possible de mettre en œuvre plusieurs seuils de dévers Sp différents, et par exemple un premier seuil de dévers Sp qui est spécifique d'un dispositif de détection mesurant l'angle de dévers du châssis roulant 21 et un deuxième seuil de dévers Sp qui est spécifique d'un dispositif de détection mesurant de l'angle de dévers du caisson de chargement 22, le deuxième seuil de dévers Sp pouvant en pratique être supérieure au premier seuil de dévers S_{β}.

A titres d'exemples non limitatifs de l'invention, le seuil de dévers °S_{β} peut par exemple être compris entre 1° et 10°, et de préférence entre 1° et 8°, notamment lorsqu'il est mesuré sur le châssis roulant 21; le seuil de contre-pente S_{Φ} peut par exemple être compris entre 1° et 15°, et de préférence entre 2° et 10° ; le seuil de vitesse Sv peut par exemple être compris entre 20km/h et 30km/h.

Dans une variante de réalisation, le seuil de pression Sp peut être prédéfini et non modifiable.

Dans une autre variante de réalisation, le seuil de pression Sp peut avantageusement être un seuil réglable, qui est modifiable par exemple par un utilisateur ou par le constructeur du système de sécurité 3 ou qui peut être calculé et peut être modifié par l'unité de traitement 32.

Plus le seuil de pression Sp est faible, et plus la détection automatique d'un risque de renversement peut intervenir de manière précoce pendant que le caisson de chargement 22 est avantageusement encore dans la position basse de la figure 1. Il en résulte que plus le seuil de pression Sp est faible, et plus il y de chances que le chauffeur du véhicule soit averti de manière précoce d'un risque de renversement, pendant que le caisson de chargement 22 est avantageusement encore dans la position basse de la figure 1. Le chauffeur du véhicule a donc suffisamment de temps pour réagir en commandant le circuit hydraulique d'alimentation du ou des vérins de levage hydrauliques 240, afin de couper manuellement l'alimentation hydraulique et éviter ainsi que le caisson de chargement 22 ne commence à être levé par rapport au châssis 21 en pivotant vers le haut, alors qu'une situation à risque a été détectée .

Plus particulièrement, le seuil de pression Sp peut être choisi de manière à être inférieur ou égal à la pression hydraulique minimale nécessaire pour lever le caisson de chargement 22, lorsqu'il est chargé au maximum du poids total roulant autorisé (PTRA) du véhicule de transport industriel V.

De préférence le seuil de pression Sp peut être choisi de manière à être inférieur ou égal à la pression hydraulique minimale nécessaire pour lever le caisson de chargement lorsqu'il est chargé à 75% du poids total roulant autorisé (PTRA) du véhicule de transport industriel V.

Plus préférentiellement, le seuil de pression Sp peut être choisi de manière à être inférieur ou égal à la pression hydraulique minimale nécessaire pour lever le caisson de chargement lorsqu'il est chargé à la moitié du poids total roulant autorisé (PTRA) du véhicule de transport industriel V.

Plus préférentiellement encore, le seuil de pression Sp peut être choisi de manière à être inférieur ou égal à la pression hydraulique minimale nécessaire pour lever le caisson de chargement 22 lorsqu'il est chargé à un tiers du poids total roulant autorisé (PTRA) du véhicule de transport industriel V.

Dans une variante de réalisation le seuil de pression Sp est choisi de manière à être inférieur ou égal à la pression hydraulique minimale nécessaire pour lever le caisson de chargement 22 à vide.

Dans une variante préférée de réalisation le seuil de pression Sp est faible et est inférieur ou égal à 10 bars et peut plus particulièrement être égal à zéro.

Le contrôle du fonctionnement du véhicule industriel V équipé d'un système de sécurité 3, au cours d'une opération de déchargement de la semi-remorque 2 du véhicule industriel, peut dans un exemple préféré de mise en œuvre de l'invention être effectué de la manière suivante.

Le véhicule industriel V, avec sa semi-remorque 2 contenant un chargement, est amené par le chauffeur jusqu'à un site de déchargement. Initialement le ou les vérins de levage hydrauliques 240 ne sont pas alimentés et le caisson de chargement 22 de la semi-remorque 2 est en position basse sur le châssis 21 et n'est pas encore levé par le ou les vérins de levage hydrauliques 240 ; la pression P détectée par le capteur de pression 30 est nulle.

Pour décharger par voie gravitaire la semi-remorque 2 attelée au véhicule tracteur 1, le chauffeur du véhicule V commande les moyens de levage hydrauliques 24, de manière à alimenter le ou les vérins de levage hydrauliques 240, avec une pression hydraulique croissante. L'angle d'inclinaison latérale β et l'angle d'inclinaison vers l'avant Φ du véhicule tracteur 1 ou de la semi-remorque 2 et la pression hydraulique dans les moyens de levage hydrauliques 24 sont contrôlés automatiquement et en permanence par le système de sécurité 3, en sorte de détecter automatiquement un risque de renversement du véhicule de transport industriel V pendant la phase de fonctionnement au cours de laquelle le ou les vérins de levage hydrauliques 240 sont alimentés sous pression, mais le caisson de chargement 22 de la semi-remorque 2 est en position basse sur le châssis 21 et n'est pas encore levé par le ou les vérins de levage hydrauliques 240.

Le contrôle du fonctionnement du véhicule industriel V équipé d'un système de sécurité 3, au cours d'une phase de roulage du véhicule, peut dans un exemple préféré de mise en œuvre de l'invention être effectué de la manière suivante.

La vitesse de déplacement du véhicule tracteur 1 ou de la semi-remorque 2 et la pression hydraulique dans les moyens de levage hydrauliques 24 sont contrôlés automatiquement et en permanence par le système de sécurité 3 pendant que le véhicule de transport industriel V roule, en sorte de détecter automatiquement un risque de renversement du véhicule de transport industriel V alors que le caisson de chargement 22 de la semi-remorque 2 est en position basse sur le châssis 21 et n'est pas encore levé par le ou les vérins de levage hydrauliques 240.

Dans les deux cas de contrôle de fonctionnent ci-dessus, lorsque le système de sécurité 3 détecte un risque de renversement du véhicule de transport industriel V, le chauffeur du véhicule coupe manuellement l'alimentation hydraulique du ou des vérins de levage hydrauliques 240.

Dans une autre variante, lorsque le système de sécurité 3 détecte un risque de renversement du véhicule de transport industriel V, il coupe automatiquement l'alimentation hydraulique du ou des vérins de levage hydrauliques 240, par exemple au moyen d'un signal de commande généré par l'unité de traitement 32 du système de sécurité 3.

### Système de sécurité 3 - moyens additionnels et optionnels

En référence à la variante particulière de réalisation de la figure 5, et de manière non limitative de l'invention, le système de sécurité 3 peut également comporter une mémoire électronique 34 locale, fixe ou amovible. L'unité de traitement 32 peut être conçue de manière à stocker dans cette mémoire 34, à chaque détection d'un risque de renversement par l'unité de traitement 32, et de préférence en les horodatant, au moins la pression hydraulique P et une information relative à chaque état de fonctionnement du véhicule V détecté au moyen des dispositifs de détection 31a, 31b, 31c, (angle d'inclinaison latérale β du véhicule ; angle d'inclinaison vers l'avant Φ du véhicule et le cas échéant éventuellement angle d'inclinaison vers l'arrière du véhicule ; vitesse de déplacement du véhicule).

L'unité de traitement 32 peut également être conçue de manière à stocker dans cette mémoire 34, à intervalles de temps prédéfinis, et de préférence en les horodatant, au moins la pression hydraulique P et une information relative à chaque état de fonctionnement du véhicule V détecté au moyen des dispositifs de détection 31a, 31b, 31c, (angle d'inclinaison latérale β du véhicule ; angle d'inclinaison vers l'avant Φ du véhicule et le cas échéant éventuellement angle d'inclinaison vers l'arrière du véhicule ; vitesse de déplacement du véhicule).

Ces données horodatées stockées dans la mémoire 34 peuvent avantageusement être récupérées ultérieurement par un tiers autorisé, et par exemple par le gestionnaire d'une flotte de véhicules industriels V ou par le constructeur du véhicule industriel V ou de la semi-remorque 2, à des fins d'analyse, notamment en cas de renversement.

De préférence, l'unité de traitement 32 et ladite mémoire électronique 34 sont logées à l'intérieur d'un boîtier de protection étanche, et plus particulièrement d'un boîtier qui est résistant aux chocs et qui est fermé et de préférence scellé au moyen d'un sceau permettant de contrôler si le boîtier a été ouvert.

En référence à la variante particulière de réalisation de la figure 5, et de manière non limitative de l'invention, le système de sécurité 3 peut également comporter des premiers moyens de communication sans fil 35, de faible portée, par exemple de type Bluetooth, permettant à l'unité de traitement 32 de communiquer avec un terminal portable 4, de type téléphone portable, positionné à proximité et/ou avec un écran 5 positionné dans la cabine du véhicule tracteur 1, de manière à communiquer au chauffeur du véhicule au moins une information visuelle et/ou sonore relative à la pression hydraulique P détectée et/ou relative à chaque état de fonctionnement du véhicule V détecté au moyen des dispositifs de détection 31a, 31b, 31c (angle d'inclinaison latérale β du véhicule ; angle d'inclinaison vers l'avant Φ du véhicule et le cas échéant éventuellement angle d'inclinaison vers l'arrière du véhicule ; vitesse de déplacement du véhicule), ainsi qu'éventuellement à déclencher sur le terminal portable 4 et/ou sur l'écran 5 une alarme visuelle et/ou sonore en cas de risque de renversement détecté par l'unité de traitement 32.

En référence à la variante particulière de réalisation de la figure 5, et de manière non limitative de l'invention, le système de sécurité 3 peut également comporter des moyens de télécommunication sans fil 36, qui permettent de faire communiquer, sur une grande distance, l'unité de traitement 32 du système de sécurité 3 avec au moins un serveur 6 distant.

Dans une autre variante de réalisation, le système de sécurité 3 peut également comporter d'autres capteurs informant en temps réel l'unité de traitement 32 sur l'état ou le fonctionnement du véhicule V, tels que par exemple et de manière non exhaustive, un capteur de l'accélération du véhicule V , un capteur détectant l'inclinaison dans un plan vertical (angle d'écoulement) du caisson de chargement 22 de la semi-remorque 2 par rapport au châssis 21 de la semi-remorque, un capteur détectant la fermeture/ouverture de la porte arrière du caisson de chargement 22, etc...

## Revendications

1. Système de sécurité (3) pour véhicule de transport industriel (V) comportant un châssis roulant (21), sur lequel est monté un caisson de chargement (22) vide ou chargé, qui est apte à pivoter vers le haut par rapport au châssis roulant (21), et des moyens de levage hydrauliques (24), qui comportent au moins un vérin de levage hydraulique (240) et qui permettent de lever le caisson de chargement (22) par rapport au châssis (21) en le faisant pivoter vers le haut, le système de sécurité comporte au moins un capteur de pression (30), qui est apte à détecter la pression hydraulique (P) dans les moyens de levage hydrauliques (24), et au moins dispositif de détection d'un état de fonctionnement du véhicule industriel (V), lequel dispositif de détection est choisi parmi le groupe suivant : dispositif de détection (31a) de l'angle d'inclinaison latérale (β) du véhicule de transport industriel (V), dispositif de détection (31b) de l'angle d'inclinaison (Φ) au moins vers l'avant du véhicule de transport industriel (V), dispositif de détection (31c) de la vitesse de déplacement du véhicule de transport industriel (V), et le système de sécurité est apte à détecter automatiquement un risque de renversement du véhicule de transport industriel (V) à partir de l'état de fonctionnement du véhicule de transport industriel (V) détecté au moyen dudit dispositif de détection et lorsqu'une pression hydraulique (P) supérieure à un seuil de pression (Sp), de préférence réglable, est détectée par le capteur de pression (30) pendant que le caisson de chargement (22) est en position basse sur le châssis (21) et n'est pas soulevé par rapport au châssis (21).

2. Système de sécurité la revendication 1, dans lequel le seuil de pression (Sp) est inférieur ou égal à la pression hydraulique minimale nécessaire pour soulever le caisson de chargement (22) chargé au maximum du poids total roulant autorisé (PTRA) du véhicule de transport industriel (V), de préférence inférieur ou égal à la pression hydraulique minimale nécessaire pour lever le caisson de chargement (22) chargé à 75% du poids total roulant autorisé (PTRA) du véhicule de transport industriel (V), plus préférentiellement dans lequel le seuil de pression (Sp) est inférieur ou égal à la pression hydraulique minimale nécessaire pour lever le caisson de chargement (22) chargé à la moitié du poids total roulant autorisé (PTRA) du véhicule de transport industriel (V), plus préférentiellement encore dans lequel le seuil de pression (Sp) est inférieur ou égal à la pression hydraulique minimale nécessaire pour lever le caisson de chargement (22) chargé à un tiers du poids total roulant autorisé (PTRA) du véhicule de transport industriel (V), plus préférentiellement encore dans lequel le seuil de pression (Sp) est inférieur ou égal à la pression hydraulique minimale nécessaire pour lever le caisson de chargement (22) à vide .

3. Système de sécurité selon l'une quelconque des revendications 1 ou 2, dans lequel le seuil de pression (Sp) est inférieur ou égal à 10 bars et plus particulièrement est égal à zéro.

4. Système de sécurité selon l'une quelconque des revendications précédentes, dans lequel le capteur de pression (30) est monté sur le vérin de levage hydraulique (240) et permet de détecter la pression hydraulique dans ce vérin de levage hydraulique (240).

5. Système de sécurité selon l'une quelconque des revendications précédentes, comportant un dispositif de détection (31a) de l'angle d'inclinaison latérale (β) du véhicule de transport industriel (V), ledit système de sécurité étant apte à détecter automatiquement un risque de renversement du véhicule de transport industriel roulant (V), lorsque l'angle d'inclinaison latérale (β) détecté par ce dispositif de détection (31a) est supérieur ou égal à au moins un seuil de dévers (S_{β}), qui est éventuellement réglable, et qu'une pression hydraulique (P) supérieure à un seuil de pression (Sp) est détectée par le capteur de pression (30) pendant que le caisson de chargement (22) est en position basse sur le châssis (21) et n'est pas soulevé par rapport au châssis (21), et de préférence ledit système de sécurité étant apte à détecter automatiquement ledit risque de renversement du véhicule de transport industriel roulant (V), tant que l'angle d'inclinaison latérale (β) est supérieur ou égal au seuil de dévers (S_{β}), ou tant qu'une pression hydraulique (P) supérieure audit seuil de pression (Sp) est détectée par le capteur de pression (30), et le seuil de dévers (Sp) étant de préférence compris entre 1° et 15°, et plus préférentiellement encore entre 2° et 10°.

6. Système de sécurité selon l'une quelconque des revendications précédentes, comportant un dispositif de détection (31b) de l'angle d'inclinaison (Φ) au moins vers l'avant du véhicule de transport industriel (V), et apte à détecter automatiquement un risque de renversement du véhicule de transport industriel roulant (V), lorsque le véhicule (V) est en contre-pente, avec un angle d'inclinaison (Φ) vers l'avant du véhicule de transport industriel (V) détecté par ce dispositif de détection (31b) qui est supérieur ou égal à au moins un seuil de contre-pente (S_{Φ}), éventuellement réglable, et qu'une pression hydraulique (P) supérieure à un seuil de pression (Sp) est détectée par le capteur de pression (30) pendant que le caisson de chargement (22) est en position basse sur le châssis (21) et n'est pas soulevé par rapport au châssis (21), et de préférence ledit système de sécurité étant apte à détecter automatiquement ledit risque de renversement du véhicule de transport industriel roulant (V), tant que l'angle d'inclinaison (Φ) vers l'avant est supérieur ou égal au seuil de contre-pente (S_{Φ}), ou tant qu'une pression hydraulique (P) supérieure audit seuil de pression (Sp) est détectée par le capteur de pression (30), et le seuil de contre-pente (S_{Φ}) étant de préférence compris entre 1° et 15°, et plus préférentiellement encore entre 2° et 10°.

7. Système de sécurité selon l'une quelconque des revendications précédentes, comportant un dispositif de détection (31c) permettant de détecter la vitesse de déplacement du véhicule de transport industriel (V), et apte à détecter automatiquement un risque de renversement du véhicule de transport industriel roulant (V), lorsque la vitesse de déplacement du véhicule de transport industriel (V) détecté par ce dispositif de détection (31c) est supérieure ou égale à au moins un seuil de vitesse (Sᵥ), qui est éventuellement réglable, et qu'une pression hydraulique (P) supérieure à un seuil de pression (Sp) est détectée par le capteur de pression (30) pendant que le caisson de chargement (22) est en position basse sur le châssis (21) et n'est pas soulevé par rapport au châssis (21), et de préférence ledit système de sécurité étant apte à détecter automatiquement ledit risque de renversement du véhicule de transport industriel roulant (V), tant que la vitesse de déplacement est supérieure ou égale audit seuil de vitesse (Sᵥ), ou tant qu'une pression hydraulique (P) supérieure audit seuil de pression (Sp) est détectée par le capteur de pression (30), et ledit seuil de vitesse (Sv) étant de préférence compris entre 20km/h et 30km/h.

8. Système de sécurité selon l'une quelconque des revendications précédentes, comportant au moins deux, et de préférence au moins trois, dispositifs de détection différents, qui sont aptes à détecter des états de fonctionnement du véhicule différents, et qui sont choisis parmi le groupe suivant: dispositif de détection (31a) de l'angle d'inclinaison latérale (β) du véhicule de transport industriel (V), dispositif de détection (31 b) de l'angle d'inclinaison (Φ) au moins vers l'avant du véhicule de transport industriel (V), dispositif de détection (31c) de la vitesse de déplacement du véhicule de transport industriel (V).

9. Système de sécurité selon l'une quelconque des revendications précédentes, apte à déclencher automatiquement une alarme visuelle et/ou sonore, en cas de détection d'un risque de renversement du véhicule industriel roulant (V).

10. Système de sécurité selon l'une quelconque des revendications précédentes, comportant une mémoire électronique (34) fixe ou amovible, et dans laquelle le système sécurité (3) est apte à stocker, de préférence en les horodatant, la pression hydraulique (P) détectée par le capteur de pression (30) et une information relative à l'état de fonctionnement du véhicule détecté par le dispositif de détection (31a ; 31b ; 31c) au moins à chaque détection d'un risque de renversement et/ou à intervalles de temps prédéfinis, et de préférence dans lequel au moins ladite mémoire électronique (34) est logée à l'intérieur d'un boîtier de protection, qui est fermé, et qui de préférence est scellé au moyen d'un sceau permettant de contrôler si le boîtier a été ouvert.

11. Véhicule de transport industriel (V) et système de sécurité (3) de l'une quelconque des revendications précédentes, le véhicule de transport industriel comportant un châssis roulant (21) sur lequel est monté un caisson de chargement (22), qui est apte à pivoter vers le haut par rapport au châssis roulant (21), et des moyens de levage (24), qui comportent au moins un vérin de levage hydraulique (240), et qui permettent de lever le caisson de chargement (22), en le faisant pivoter vers le haut par rapport au châssis roulant (21).

12. Véhicule de transport industriel (V) et système de sécurité (3) selon la revendication 11, le système de sécurité (3) étant apte à détecter automatiquement ledit risque de renversement du véhicule de transport industriel (V), pendant que le caisson de chargement (22) est en position basse sur le châssis (21) et n'est pas soulevé par rapport au châssis (21), au moins lorsque le poids total du véhicule de transport industriel (V) chargé est égal au poids total roulant autorisé (PTRA) du véhicule de transport industriel (V), de préférence au moins lorsque le poids total du véhicule de transport industriel (V) chargé est égal à 75% du poids total roulant autorisé (PTRA) du véhicule de transport industriel (V), plus préférentiellement au moins lorsque le poids total du véhicule de transport industriel (V) chargé est égal à la moitié du poids total roulant autorisé (PTRA) du véhicule de transport industriel (V), et plus préférentiellement encore au moins lorsque le poids total du véhicule de transport industriel (V) chargé est égal à un tiers du poids total roulant autorisé (PTRA) du véhicule de transport industriel (V).

13. Véhicule de transport industriel (V) et système de sécurité (3) selon la revendication 11, le système de sécurité (3) étant apte à détecter automatiquement ledit risque de renversement du véhicule de transport industriel (V), au moins lorsque le caisson de chargement (22) est vide et en position basse sur le châssis (21) de la semi-remorque (2) et n'est pas soulevé par rapport au châssis (21).

14. Véhicule de transport industriel (V) et système de sécurité (3) selon l'une quelconque des revendications 11 à 13, le véhicule de transport industriel (V) comportant un véhicule tracteur (1) et une semi-remorque (2) apte à être attelée au véhicule tracteur (1), ou un camion porteur et une remorque apte à être attelée au camion porteur, ou le véhicule de transport industriel (V) étant constitué par un camion porteur, ledit système de sécurité (3) étant de préférence dans son intégralité monté sur la semi-remorque (2) ou sur la remorque ou sur le camion porteur.

15. Semi-remorque (2) ou remorque ou camion porteur équipé d'un système de sécurité (3) de l'une quelconque des revendications 1 à 10, la semi-remorque (2) ou la remorque ou le camion porteur comportant un châssis roulant (21) sur lequel est monté un caisson de chargement (22), qui est apte à pivoter vers le haut par rapport au châssis roulant (21), et des moyens de levage (24), qui comportent au moins un vérin de levage hydraulique (240), et qui permettent de lever le caisson de chargement (22), en le faisant pivoter vers le haut par rapport au châssis roulant (21).

16. Procédé de contrôle du fonctionnement du véhicule de transport industriel (V) de l'une quelconque des revendications 11 à 14, au cours d'une opération de déchargement du caisson de chargement (22), au cours duquel initialement le ou les vérins de levage hydrauliques (240) ne sont pas alimentés et le caisson de chargement (22) est en position basse sur le châssis (21) et n'est pas encore levé par le ou les vérins de levage hydrauliques (240), et au cours duquel on commande les moyens de levage hydrauliques (24), de manière à alimenter le ou les vérins de levage hydrauliques (240), avec une pression hydraulique croissante, et on contrôle en permanence, au moyen du système de sécurité (3), l'angle d'inclinaison latérale (β) du véhicule de transport industriel (V) et la pression hydraulique dans les moyens de levage hydrauliques (24), en sorte de détecter automatiquement, au moyen du système de sécurité (3), un risque de renversement du véhicule de transport industriel (V) pendant la phase de fonctionnement au cours de laquelle le ou les vérins de levage hydrauliques (240) sont alimentés sous pression mais le caisson de chargement (22) est en position basse sur le châssis (21) et n'est pas encore levé par le ou les vérins de levage hydrauliques (240) ou dans lequel au cours d'une opération de déchargement du caisson de chargement (22), au cours duquel initialement le ou les vérins de levage hydrauliques (240) ne sont pas alimentés et le caisson de chargement (22) est en position basse sur le châssis (21) et n'est pas encore levé par le ou les vérins de levage hydrauliques (240), et au cours duquel on commande les moyens de levage hydrauliques (24), de manière à alimenter le ou les vérins de levage hydrauliques (240), avec une pression hydraulique croissante, et on contrôle en permanence, au moyen du système de sécurité (3), l'angle d'inclinaison (Φ) vers l'avant du véhicule de transport industriel (V) et la pression hydraulique dans les moyens de levage hydrauliques (24), en sorte de détecter automatiquement, au moyen du système de sécurité (3), un risque de renversement du véhicule de transport industriel (V) pendant la phase de fonctionnement au cours de laquelle le ou les vérins de levage hydrauliques (240) sont alimentés sous pression mais le caisson de chargement (22) est en position basse sur le châssis (21) et n'est pas encore levé par le ou les vérins de levage hydrauliques (240).

17. Procédé de contrôle du fonctionnement du véhicule de transport industriel (V) de de l'une quelconque des revendications 11 à 14, en cours de roulage du véhicule, au cours duquel on contrôle en permanence au moyen du système de sécurité (3) la vitesse de déplacement du véhicule de transport industriel (V) et la pression hydraulique dans les moyens de levage hydrauliques (24), en sorte de détecter automatiquement, au moyen du système de sécurité (3), un risque de renversement du véhicule de transport industriel (V) pendant que le caisson de chargement (22) est en position basse sur le châssis (21) et n'est pas encore levé par le ou les vérins de levage hydrauliques (240).

18. Procédé selon l'une quelconque des revendications 16 à 17, au cours duquel on coupe automatiquement ou manuellement l'alimentation hydraulique du ou des vérins de levage hydrauliques (240), lorsqu'on détecte automatiquement au moyen du système de sécurité (3) un risque de renversement du véhicule de transport industriel (V) pendant que le caisson de chargement (22) est en position basse sur le châssis (21) et n'est pas encore levé par le ou les vérins de levage hydrauliques (240).
